# EUROPEAN PATENT APPLICATION

(11) **EP 4 478 247 A1**
(43) Date of publication of application: **18.12.2024**
(21) Application number: 22933106.1
(22) Date of filing: 16.11.2022
(51) Int. Cl.: G06N 3/02

(54) **BIAS EVALUATION METHOD AND APPARATUS, MEDIUM, PROGRAM PRODUCT, AND ELECTRONIC DEVICE**

(30) Priority: 21.03.2022 CN 202210281564
(71) Applicant: Huawei Cloud Computing Technologies Co., Ltd., Gui'an New District, Guizhou 550025 (CN)
(72) Inventor: CHEN, Xiaoshi, Guizhou 550025 (CN); ZHANG, Shijie, Guizhou 550025 (CN); ZHU, Senhua, Guizhou 550025 (CN)
(74) Representative: Grünecker Patent- und Rechtsanwälte PartG mbB
(86) International application number: PCT/CN2022/132232
(87) International publication number: WO 2023/179055

(57) **Abstract**

A bias evaluation method and apparatus, a medium, a program product, and an electronic device are applied to the field of artificial intelligence, and are provided to reduce a requirement on collecting a verification dataset, obtain a comprehensive bias evaluation result, and intuitively present the bias evaluation result to a user. The method includes: obtaining a to-be-verified factor; classifying a plurality of evaluation images based on the to-be-verified factor, to obtain a first target evaluation image set, where the first target evaluation image set includes a first evaluation image set including the to-be-verified factor and/or a second evaluation image set not including the to-be-verified factor; performing style conversion on the first target evaluation image set based on the to-be-verified factor, to obtain a second target evaluation image set; inputting the first target evaluation image set and the second target evaluation image set into the to-be-evaluated model for inference; and outputting a bias evaluation result of the to-be-evaluated model based on an inference result, where style conversion is implemented by removing or adding the to-be-verified factor.

## Description

This application claims priority to Chinese Patent Application No. 202210281564.1, filed with the China National Intellectual Property Administration on March 21, 2022 and entitled "BIAS EVALUATION METHOD AND APPARATUS, MEDIUM, PROGRAM PRODUCT, AND ELECTRONIC DEVICE", which is incorporated herein by reference in its entirety.

### TECHNICAL FIELD

This application relates to the field of artificial intelligence, and in particular, to a bias evaluation method and apparatus, a medium, a program product, and an electronic device.

### BACKGROUND

Image dataset biases refer to "false technical features" in an image dataset. These false technical features are features that exist in image data and that are not expected to be learned by a machine learning model when the machine learning model is trained by using the image data.

In some scenarios, some images in the image dataset include information such as a device label like a model of an image capturing device, an image capturing parameter, and a manual mark, and the information may become a false feature for model learning. Consequently, the machine learning model cannot objectively and truly learn a target task as expected by a designer. In this case, the trained machine learning model may not be able to complete the target task as expected in an actual use environment. As a result, the model is biased, and extensive errors may occur in a recognition result. For example, for a medical image recognition model whose target task is to recognize a severe case image, if a label of a severe case room device exists in a training dataset, the model learns a feature of the label during training to infer whether a medical image is a severe case image, but does not learn an image feature related to a lesion tissue. Further, if a severe heart disease image is input into trained medical image data, but the medical image does not have the label of the severe case room device, the model may not be able to infer that a patient has a severe heart disease. Consequently, a serious error occurs in a recognition result of the model. Therefore, a convenient method is urgently needed to perform bias evaluation on the trained machine learning model, to better use the machine learning model.

### SUMMARY

In view of this, embodiments of this application provide a bias evaluation model and apparatus, a medium, a program product, and an electronic device, to reduce a requirement on collecting a verification dataset, obtain a comprehensive bias evaluation result of a to-be-evaluated model, and intuitively display the bias evaluation result to a user.

According to a first aspect, an embodiment of this application provides a bias evaluation method, applied to an electronic device, where the method includes: obtaining a to-be-verified factor existing in a plurality of evaluation images that are used to perform bias evaluation on a to-be-evaluated model; classifying the plurality of evaluation images based on the to-be-verified factor, to obtain a first target evaluation image set, where the first target evaluation image set includes a first evaluation image set including the to-be-verified factor and/or a second evaluation image set not including the to-be-verified factor; performing style conversion on the first target evaluation image set based on the to-be-verified factor, to obtain a second target evaluation image set; inputting the first target evaluation image set and the second target evaluation image set into the to-be-evaluated model for inference, to obtain a target inference result; and outputting a bias evaluation result of the to-be-evaluated model based on the target inference result, where the bias evaluation result represents whether the to-be-verified factor causes a bias of the to-be-evaluated model. Style conversion performed on the first evaluation image set is implemented by removing the to-be-verified factor, and style conversion performed on the second evaluation image set is implemented by adding the to-be-verified factor. It may be understood that the plurality of evaluation images are the following verification dataset. The first evaluation image set and the second evaluation image set may be different subsets obtained by dividing the following verification dataset. The to-be-verified factor may be an image feature, for example, an image feature of a heart pacemaker. For example, an image before style conversion is an X-ray image that is of a heart disease patient and that includes the image feature of the heart pacemaker, and an image after the style conversion is an X-ray image that is of the heart disease patient and on which the heart pacemaker image is removed. In this way, according to the bias evaluation method provided in this application, an actual label of a sample image does not need to be collected, and a difficulty that images of some categories cannot be obtained in practice is overcome. This has a low requirement on collecting sample images in a verification dataset, so that sample collection time of a user can be reduced.

In a possible implementation of the first aspect, the bias evaluation result includes at least one of the following: information about whether the to-be-verified factor is a factor that causes the bias of the to-be-evaluated model; a difference image in the first target evaluation image set, where the difference image is an evaluation image that is in the first target evaluation image set and whose inference result is different from an inference result of at least one corresponding converted image that is obtained through style conversion and that is in the second target evaluation image set, and both the inference result of the difference image and the inference result of the converted image are inference results output by the to-be-evaluated model; a converted image that is obtained by performing style conversion on each difference image and that is included in the second target evaluation set; an inference result of the to-be-evaluated model for each difference image; an inference result of the to-be-evaluated model for each converted image; and a proportion of a difference image in the first target evaluation image set in the plurality of evaluation images. In this way, a comprehensive bias evaluation result that is of the to-be-evaluated model and that is based on the plurality of to-be-evaluated images may be presented to the user.

It may be understood that the difference image is a difference sample or an image with a large difference described below. For example, a difference image in the first target evaluation image set is an X-ray image that is of a heart disease patient and that includes the image feature of the heart pacemaker, and a corresponding style-converted image in the second target evaluation image set is an X-ray image (namely, a corresponding converted image) that is of the heart disease patient and on which the heart pacemaker image is removed. In addition, that inference results of two images are different may mean that the inference results are different or differ greatly. For example, when the to-be-evaluated model is a classification model, that the inference results of the to-be-evaluated model for the two images are different means that classification results of the two images are different. When the to-be-evaluated model is a detection model, that the inference results of the to-be-evaluated model for the two images are different means that intersection-over-union (Intersection-over-Union, IoU) of rectangular boxes in the two images is lower than a specified IoU threshold.

In a possible implementation of the first aspect, the to-be-verified factor is determined based on a background and a foreground of each original image in a verification dataset, and the to-be-verified factor corresponds to an image feature in the background.

In a possible implementation of the first aspect, style conversion of an image is implemented by using an image style conversion model, and the style conversion model is obtained through training based on the first evaluation image set and the second evaluation image set; and the image style conversion model is configured to: remove the verification factor from an image including the verification factor, and add the verification factor to an image not including the verification factor, where the verification factor is an image feature.

In a possible implementation of the first aspect, the first evaluation image set corresponds to a first classification label, the second evaluation image set corresponds to a second classification label different from the first classification label, and the image style conversion model is obtained through training based on an image in the first evaluation image set, the first classification label, an image in the second evaluation image set, and the second classification label.

In a possible implementation of the first aspect, the method further includes: receiving the verification dataset and the to-be-evaluated model that are input by the user.

In a possible implementation of the first aspect, the method further includes: receiving the to-be-verified factor that is input by the user, where the to-be-verified factor is an image feature or an identifier indicating an image feature.

According to a second aspect, an embodiment of this application provides a bias evaluation apparatus, including: an obtaining module, configured to obtain a to-be-verified factor existing in a plurality of evaluation images that are used to perform bias evaluation on a to-be-evaluated model; a classification module, configured to classify the plurality of evaluation images based on the to-be-verified factor obtained by the obtaining module, to obtain a first target evaluation image set, where the first target evaluation image set includes a first evaluation image set including the to-be-verified factor and/or a second evaluation image set not including the to-be-verified factor; a conversion module, configured to perform, based on the to-be-verified factor, style conversion on the first target evaluation image set obtained by the classification module, to obtain a second target evaluation image set; an inference module, configured to input the first target evaluation image set obtained by the classification module and the second target evaluation image set obtained by the conversion module into the to-be-evaluated model for inference, to obtain a target inference result; and an output module, configured to output a bias evaluation result of the to-be-evaluated model based on the target inference result obtained by the inference module, where the bias evaluation result represents whether the to-be-verified factor causes a bias of the to-be-evaluated model. Style conversion performed on the first evaluation image set is implemented by removing the to-be-verified factor, and style conversion performed on the second evaluation image set is implemented by adding the to-be-verified factor.

In a possible implementation of the second aspect, the bias evaluation result includes at least one of the following: information about whether the to-be-verified factor is a factor that causes the bias of the to-be-evaluated model; a difference image in the first target evaluation image set, where the difference image is an evaluation image that is in the first target evaluation image set and whose inference result is different from an inference result of at least one corresponding converted image that is obtained through style conversion and that is in the second target evaluation image set, and both the inference result of the difference image and the inference result of the converted image are inference results output by the to-be-evaluated model; a converted image that is obtained by performing style conversion on each difference image and that is included in the second target evaluation set; an inference result of the to-be-evaluated model for each difference image; an inference result of the to-be-evaluated model for each converted image; and a proportion of a difference image in the first target evaluation image set in the plurality of evaluation images.

In a possible implementation of the second aspect, the to-be-verified factor is determined based on a background and a foreground of each original image in a verification dataset, and the to-be-verified factor corresponds to an image feature in the background.

In a possible implementation of the second aspect, style conversion of an image is implemented by using an image style conversion model, and the style conversion model is obtained through training based on the first evaluation image set and the second evaluation image set.

In addition, the image style conversion model is configured to: remove the verification factor from an image including the verification factor, and add the verification factor to an image not including the verification factor, where the verification factor is an image feature.

In a possible implementation of the second aspect, the first evaluation image set corresponds to a first classification label, the second evaluation image set corresponds to a second classification label different from the first classification label, and the image style conversion model is obtained through training based on an image in the first evaluation image set, the first classification label, an image in the second evaluation image set, and the second classification label.

In a possible implementation of the second aspect, the apparatus further includes an input module, configured to receive the verification dataset and the to-be-evaluated model that are input by a user.

In a possible implementation of the second aspect, the input module is further configured to receive the to-be-verified factor that is input by the user, where the to-be-verified factor is an image feature or an identifier indicating an image feature.

For example, the bias evaluation apparatus may be disposed in an electronic device, the obtaining module, the classification module, the conversion module, and the output module may be implemented by using a processor in the electronic device, and the input module may be implemented by using an interface unit of the electronic device.

According to a third aspect, an embodiment of this application provides a computer-readable storage medium, where the computer-readable storage medium stores instructions, and when the instructions are executed on an electronic device, the electronic device is enabled to perform the bias evaluation method according to the first aspect.

According to a fourth aspect, an embodiment of this application provides a computer program product, where the computer program product includes instructions, and the instructions are used to implement the bias evaluation method according to the first aspect.

According to a fifth aspect, an embodiment of this application provides an electronic device, including:
a memory, configured to store instructions executed by one or more processors of the electronic device; and
the processors, where when the instructions are executed by the one or more processors, the processors are configured to perform the bias evaluation method according to the first aspect.

### BRIEF DESCRIPTION OF DRAWINGS

FIG. 1 is a diagram of an application scenario of bias evaluation according to an embodiment of this application;
FIG. 2 is a block diagram of an architecture of a system to which a bias evaluation method is applied according to an embodiment of this application;
FIG. 3 is a diagram of to-be-evaluated models of different categories according to an embodiment of this application;
FIG. 4 is a block diagram of an architecture of a system to which a bias evaluation method is applied according to an embodiment of this application;
FIG. 5 is a schematic flowchart of a bias evaluation method according to an embodiment of this application;
FIG. 6 is a diagram of a display interface of a bias evaluation result according to an embodiment of this application;
FIG. 7 is a schematic flowchart of a bias evaluation method that is based on a medical image evaluation model according to an embodiment of this application;
FIG. 8A, FIG. 8B, and FIG. 9 are diagrams of a display interface of a bias evaluation result according to an embodiment of this application; and
FIG. 10 is a block diagram of a structure of an electronic device according to an embodiment of this application.

### DESCRIPTION OF EMBODIMENTS

Embodiments of this application include but are not limited to a bias evaluation method, a medium, and an electronic device.

The following describes some related concepts in embodiments of this application.
(1) Machine learning (Machine learning): The machine learning is a science of artificial intelligence, and a main research object in this field is artificial intelligence, especially how to improve performance of a specific algorithm in experience learning.
(2) Deep learning (deep learning): The deep learning is a type of machine learning technology that is based on a deep neural network algorithm. A main feature of the deep learning is to process and analyze data by using a plurality of nonlinear transformation structures. The deep learning is mainly applied to scenarios such as perception and decision-making in the field of artificial intelligence, such as image and speech recognition, natural language translation, and computer games.
(3) Data bias (Data bias): The data bias is alternatively referred to as an image dataset bias. For a specific machine learning task, a factor that is related to the task but does not have a non-causal relationship with the task exists in data. For example, samples are unbalanced, or a manual mark exists in the data. The data bias may cause a machine learning model to learn a false feature.
(4) Evaluation parameter of a machine learning model

The following uses an example in which the machine learning model is a binary classification model, to describe the evaluation parameter of the machine learning model with reference to actual values and predicted values shown in Table 1.

**Table 1**

| | Predicted value=1 | Predicted value=0 |
|---|---|---|
| Actual value=1 | True positive | False negative |
| Actual value=0 | False negative | True negative |

Image samples have two classifications: a positive sample and a negative sample, where 1 indicates the positive sample, and 0 indicates the negative sample.

Specifically, the evaluation parameter of the machine learning model includes the following parameters.

Positive (Positive): A prediction result of the model is positive.

Negative (Negative): A prediction result of the model is negative.

True positive (True Positive, TP): An actual category of a sample is positive, and a prediction result of the model is also positive. For example, an actual value of a sample shown in Table 1 is equal to 1 and a predicted value is equal to 1.

True negative (True Negative, TN): An actual category of a sample is negative, and the model predicts that the sample is negative. For example, an actual value of an image sample shown in Table 1 is equal to 1 and a predicted value is equal to 0.

False positive (False Positive, FP): An actual category of a sample is negative, but the model predicts that the sample is positive. For example, an actual value of an image sample shown in Table 1 is equal to 0 and a predicted value is equal to 1.

False negative (False Negative, FN): An actual category of a sample is positive, but the model predicts that the sample is negative. For example, an actual value of an image sample shown in Table 1 is equal to 0 and a predicted value is equal to 0.
Accuracy (Accuracy)=(TP+TN)/(TP+TN+FN+TN)
Precision (Precision)=TP/(TP+FP)
A true positive rate (True Positive Rate, TPR) is also referred to as sensitivity (Sensitivity) or a recall (Recall) rate, where Recall rate=TPR=TP/(TP+FN)
True negative rate (True Negative Rate, TNR)=Specificity (Specificity)=TN/(TN+FP)
False negative rate (False Negative Rate, FNR)=Missed diagnosis rate=(1-Sensitivity)=FN/(TP+FN)=1- TPR.
False positive rate (False Positive Rate, FPR)=Misdiagnosis rate=(1-Specificity)=FP/(FP+TN)=1-TNR.

A dice similarity coefficient (Dice Similarity Coefficient, DSC) is also referred to as a dice coefficient or a dice, and is usually used to calculate similarity between two samples, where a value ranges from 0 to 1, and Dice=2TP/(FP+2TP+FN). For example, for a segmentation task, a value of the dice is 1 when a segmentation result is the best, and a value of the dice is 0 when a segmentation result is the worst.

Intersection-over-union (Intersection-over-Union, IoU) is a ratio of an intersection set to a union set of two bounding boxes (for example, rectangular boxes). For example, IoU=TP/(FP+TP+FN).

It should be noted that model and dataset biases are extensive problems that have great negative impact on machine learning, especially deep learning, and are difficult to perceive and prone to being ignored. Especially in a scenario with a high requirement on model security, a model trained by using biased datasets may cause serious accidents in actual use.

In an example, in some medical image recognition scenarios, when a heart pacemaker exists in a medical image, there is a high probability that the machine learning model infers that a patient has a heart disease; and when an intubation tube of a patient exists in a medical image, there is a high probability that the model infers that the patient has a respiratory disease. However, a doctor usually manually marks some exclusive identifiers on an image, and these identifiers may be related to a hospital, a doctor, or a disease. Therefore, the model may infer, by learning these identifiers, whether a medical image is a heart disease image. In this way, the trained model is likely to infer, by using a manually marked exclusive identifier that is related to the heart disease, that the patient has the heart disease. For example, the exclusive identifier related to the heart disease in the medical image may be an image feature of the heart pacemaker, a text feature related to the heart disease, or a label of a specific detection device. In this case, if a medical image of a heart disease patient does not have the exclusive identifier related to the heart disease, for example, does not have the image feature of the heart pacemaker, the model may not be able to recognize the medical image as a heart disease image by using an image feature of a human tissue, resulting in an incorrect recognition result.

In some conventional bias evaluation methods, some verification factors that may cause a bias can be manually selected, and then the verification factors are verified one by one, to determine a factor that cause a bias of the model. Specifically, in the method, a verification dataset may be segmented into a plurality of subsets based on a verification factor, and then a difference between inference results of the machine learning model for the subsets is counted. For example, a model evaluation parameter like accuracy or a recall rate is counted for a classification model, to represent a difference between inference results. Further, it may be determined whether the difference between the inference results is significant, to determine whether the current to-be-verified factor causes a bias of the model. If it is determined that the difference between the inference results of the model is significant, it is considered that the current to-be-verified factor causes the bias of the model. In other words, the model has a bias against image data in a subset obtained by segmenting the verification dataset based on the to-be-verified factor. For example, the machine learning model is a classification model for binary classification, and the verification dataset is divided into two subsets based on a verification factor. Then, the machine learning model separately performs inference on images in the two subsets, and obtain inference results. It is counted that accuracy of inferring, by the model, an image in the first subset as a positive sample is 90%, and accuracy of inferring, by the model, an image in the other subset as a positive sample is 10%. An accuracy difference between the two is significant, indicating that the to-be-verified factor causes a bias of the model.

However, in different subsets in the verification dataset, proportions of positive samples may be inconsistent. Therefore, image data in the verification dataset needs to have an actual label, and a difference between inference results of the model for the subsets can be determined only with reference to the actual label of the image data. In addition, some classified samples may be difficult to collect, for example, X-ray images of normal persons using heart pacemakers. Therefore, the method has a high requirement on the verification dataset.

To resolve the foregoing problem, embodiments of this application provide a bias evaluation method that is based on image style conversion. After at least one to-be-verified factor is determined, and a verification dataset is divided into subsets of different categories (or referred to as classified subsets) based on the to-be-verified factor, style conversion is performed on an image in a subset of each category, to convert the image into an image in a style corresponding to a subset of another category. The style of the image may include a texture, a shape, a color, a structure, and the like of the image. Therefore, an image of a category that is difficult to obtain or cannot be obtained in practice can be obtained. Further, a to-be-evaluated machine learning model (referred to as a to-be-evaluated model below) separately performs inference on an original image and a style-converted image of a same image, to obtain inference results. Then, the to-be-evaluated model evaluates different inference results of a same image, to obtain a bias evaluation result of the to-be-evaluated model for the at least one to-be-verified factor, for example, an image in which the to-be-evaluated model has a bias and a bias degree score, and provides the bias evaluation result to the user.

For example, in a medical image recognition scenario in which a heart disease image is recognized, factors such as an image feature of a heart pacemaker, a text feature related to a heart disease, and a label of a specific detection device may be used as to-be-verified factors that may cause a bias of the to-be-evaluated model. In an example, style conversion is performed on a medical image based on the image feature of the heart pacemaker, namely, the to-be-verified factor, to obtain a medical image that is of a heart disease patient and that does not include the image feature of the heart pacemaker and a medical image that is of a normal person and that includes the image feature of the heart pacemaker.

It should be noted that the verification factor in embodiments of this application is mainly an image feature in an image, for example, a local image feature, for example, the image feature of the heart pacemaker.

In this way, according to the bias evaluation method provided in this application, an actual label of a sample image does not need to be collected, and a difficulty that images of some categories cannot be obtained in practice is overcome. This has a low requirement on collecting sample images in a verification dataset, so that sample collection time of a user can be reduced.

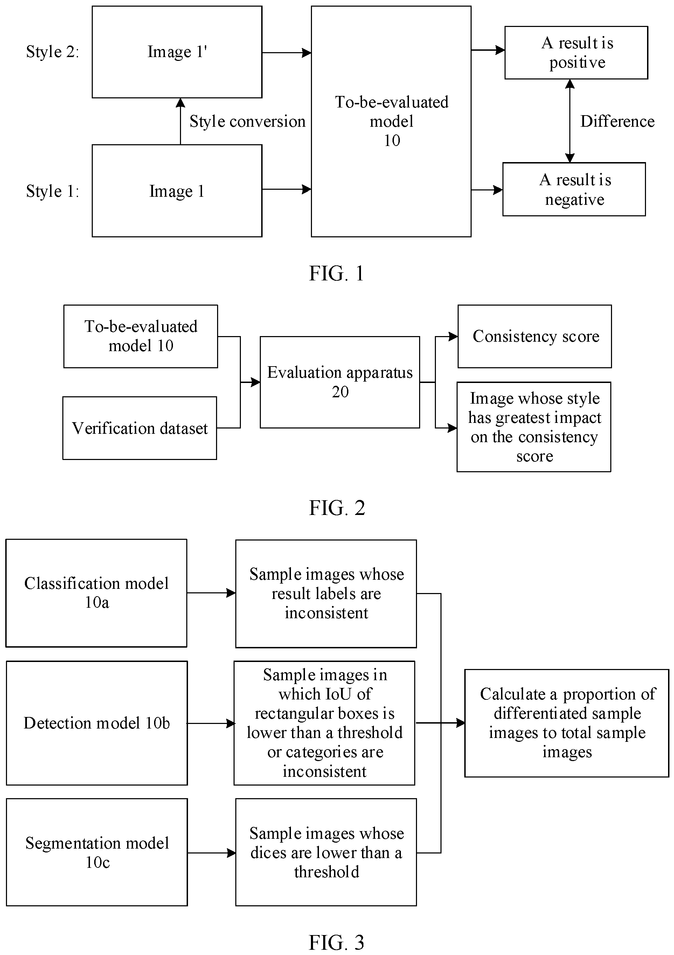

FIG. 1 is a diagram of an application scenario of bias evaluation according to this application. As shown in FIG. 1, it is assumed that a verification dataset is divided into a subset 1 of a category 1 and a subset 2 of a category 2 based on a verification factor. A style of the category 1 is denoted as a style 1, and a style of the category 2 is denoted as a style 2.

Further, for an image 1 whose style is the style 1 and an image 1' that is obtained by performing style conversion on the image 1 and whose style is the style 2, an inference result of a to-be-evaluated model 10 for the image 1 is positive, and an inference result for the image 1' is negative. In other words, the to-be-evaluated model 10 has different inference results for different styles of the image 1. This indicates that the to-be-evaluated model 10 has a bias against the image 1, or has a bias against an image in a subset to which the image 1 belongs. It may be understood that, that inference results of two images are different may be that the inference results of the two images differ greatly.

In an example, in a medical image recognition scenario in which a heart disease image is recognized, an image in the verification dataset is a medical image, a positive sample is a heart disease X-ray image, and a negative sample is an X-ray image of a normal person. That the image 1 shown in FIG. 1 is positive means that an inference result of the image 1 is a heart disease X-ray image, and that the image 1' is negative means that an inference result of the image 1' is a normal X-ray image. In an example, in this scenario, factors such as an image feature of a heart pacemaker, a text feature related to a heart disease, and a label of a specific detection device may be used as to-be-verified factors that may cause a bias of the to-be-evaluated model. In other words, these factors may affect determining of a medical image related to the heart disease. For example, style conversion is performed based on the image feature of the heart pacemaker, namely, the to-be-verified factor. The style 1 may be that an image has the image feature of the heart pacemaker, and the style 2 may be that a medical image does not have the image feature of the heart pacemaker. In this case, style conversion between the style 1 and the style 2 is to add the image feature of the heart pacemaker to the medical image or remove the image feature of the heart pacemaker from the medical image.

In another example, in a medical image recognition scenario in which a cervical cancer cell image is recognized, an image in the verification dataset is a medical image, a positive sample in the verification dataset is a cell image of a cervical cancer patient, and a negative sample may be a cell image of a normal person. That the image 1 shown in FIG. 1 is positive means that the image 1 is a cervical cancer cell image, and that the image 1' is negative means that an inference result of the image 1' is a normal cell image. In an example, in this scenario, factors such as an image feature of cell atrophy and a model of an image capturing device may be used as to-be-verified factors that may cause a bias of the to-be-evaluated model. In other words, these factors may affect determining of a medical image related to a cervical cancer. For example, style conversion is performed based on the image feature of the cell atrophy, namely, the to-be-verified factor. The style 1 may be that an image has the image feature of the cell atrophy, and the style 2 may be that an image does not have the image feature of the cell atrophy. In this case, style conversion between the style 1 and the style 2 is to add the image feature of the cell atrophy to the medical image or remove the image feature of the cell atrophy from the medical image.

It should be noted that an execution body of the bias evaluation method provided in embodiments of this application may be an electronic device, a central processing unit (Central Processing Unit, CPU) of the electronic device, or a control module or apparatus that is in the electronic device and that is configured to perform the bias evaluation method.

It may be understood that the electronic device applicable to this application may include but is not limited to: a mobile phone, a tablet computer, a camera, a camera, a desktop computer, a laptop computer, a handheld computer, a notebook computer, a desktop computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, a media player, a smart television, a smart speaker, a smart watch, and the like.

In addition, in some other embodiments, the execution body of the bias evaluation method provided in embodiments of this application may alternatively be a server. In an example, the server may be a cloud server. The cloud server may be a hardware server, or may be embedded in a virtualization environment. For example, the server may be a virtual machine executed on a hardware server including one or more other virtual machines. In addition, the server may alternatively be an independent server. The independent server has all software and hardware resources of the entire server, and may independently allocate and implement a plurality of services, for example, perform the bias evaluation method in this application.

In the following embodiments, the bias evaluation method provided in embodiments of this application is mainly described by using an electronic device as an execution body.

The following further describes embodiments of this application in detail with reference to the accompanying drawings.

FIG. 2 is a block diagram of an architecture of a software system of an electronic device to which a bias evaluation method is applied according to an embodiment of this application. The framework includes a to-be-evaluated model 10 and an evaluation apparatus 20.

The to-be-evaluated model 10 and a verification dataset are input into the evaluation apparatus 20, and a consistency score of each image in the verification dataset and an image whose style has greatest impact on a consistency score are output. It may be understood that the to-be-evaluated model 10 may perform inference on an original image of a same image in each subset and an image that is obtained by converting the original image into a style corresponding to another subset, and then obtain a consistency score based on inference results. The consistency score is used to measure a degree of impact of different styles on inference results of the image, namely, a difference between inference results of different styles of the image. In addition, the image whose style has greatest impact on the consistency score is an image, in images of different styles, whose inference result differs greatly from an inference result of the original image.

In an example, the consistency score is a score of a subset in the verification dataset, and is specifically a proportion, in total sample images in the verification dataset, of a sample image for which an inference result of the to-be-evaluated model 10 for an original image of the same image in the subset differs greatly from an inference result for an image that is obtained by converting the original image into another style. The image whose style has greatest impact on the consistency score is an image in a subset in which a proportion of an image for which inference results differ greatly in the total sample images in the verification dataset is the highest.

In addition, the consistency score is a score of an image in the verification dataset, and is specifically a proportion, in a subset quantity, of a sample image for which an inference result of the to-be-evaluated model 10 for an original image of the same image differs greatly from an inference result for an image that is obtained by converting the original image into another style. The image whose style has greatest impact on the consistency score is an image in a subset in which a proportion of an image for which inference results differ greatly in the total sample images in the verification dataset is the highest.

In embodiments of this application, for ease of description in different positions, different nouns are used to describe a same object, but this does not constitute a limitation on an essence of the object. For example, image data in the verification dataset in this application may also be referred to as an image, an example, a sample, or the like, and all these represent an image. For another example, the consistency score in this application may also be referred to as a bias score, a score, or the like. For another example, a group in the verification dataset may also be referred to as a classification, a subset, a set, or the like. For another example, an image in the verification dataset may also be referred to as an evaluation image.

In some embodiments, the to-be-evaluated model 10 may be a machine learning model obtained through training based on the verification dataset or another dataset, and subsequently, inference may be performed on the image data in the verification dataset to obtain an inference result.

In some embodiments, refer to a diagram of to-be-evaluated models of different categories shown in FIG. 3. As shown in FIG. 3, the to-be-evaluated model 10 may be a classification model 10a, a detection model 10b, a segmentation model 10c, or the like.

In an example, when the to-be-evaluated model 10 is the classification model 10a shown in FIG. 3, the classification model 10a may separately output result labels for images of different styles of a same image sample. For example, the classification model 10a is configured to classify animals such as cats and dogs in an image. In this case, a result label determined by the classification model 10a is a label of animals such as cats or dogs. Further, the evaluation apparatus 20 may determine image samples that are in each subset and for which images that are of different styles and that correspond to the same image have inconsistent result labels, use these image samples as differentiated samples, and calculate a proportion of the differentiated samples in the total image samples in the verification dataset, to obtain a consistency score corresponding to each subset.

In an example, when the to-be-evaluated model 10 is the detection model 10b shown in FIG. 3, the detection model 10b may separately output rectangular boxes of to-be-detected objects for images of different styles of a same image sample. For example, the detection model 10b is configured to determine rectangular boxes in which objects such as a vehicle, an animal, and a person are located in an image. In this case, the rectangular boxes are for object categories such as the vehicle, the animal, and the person. Further, the evaluation apparatus 20 may determine, as differentiated samples, image samples that are in each subset and for which intersection-over-union (Intersection-over-Union, IoU) of rectangular boxes of to-be-detected objects of a same object category in images that are of different styles and that correspond to the same image are lower than a specified IoU threshold or image samples for which object categories of rectangular boxes are inconsistent, and calculate a proportion of the differentiated samples in the total image samples in the verification dataset, to obtain a consistency score corresponding to each subset.

In an example, when the to-be-evaluated model 10 is the segmentation model 10c shown in FIG. 3, the segmentation model 10c may obtain, through segmentation, different segmentation objects for images of different styles of a same image sample. For example, the segmentation objects are objects such as a street view, a person, a vehicle, and an animal. Further, the evaluation apparatus 20 may determine, as differentiated samples, image samples that are in each subset and for which dices of segmentation objects in images that are of different styles and that correspond to the same image are less than a specified dice threshold, and calculate a proportion of the differentiated samples in the total image samples in the verification dataset, to obtain a consistency score corresponding to each subset.

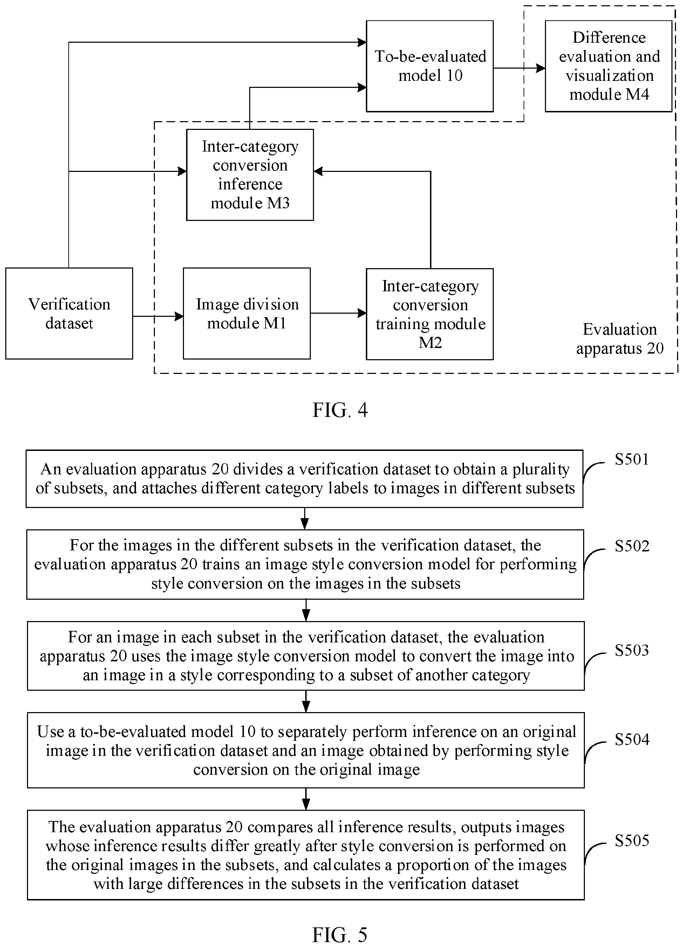

Next, based on the software system shown in FIG. 2, an architecture of the evaluation apparatus 20 in the system is described in detail with reference to FIG. 4.

The to-be-evaluated apparatus 20 in the system shown in FIG. 4 includes an image division module M1, an inter-category conversion training module M2, an inter-category conversion inference module M3, and a difference evaluation and visualization module M4.

The image division module M1 is configured to divide (or referred to as classification) the verification dataset based on a to-be-verified factor to obtain a plurality of subsets of different categories, where each category corresponds to one style.

In an example, when the to-be-verified factor is whether an X-ray image has an image feature of a heart pacemaker, the verification dataset may be divided, based on the to-be-verified factor, into a subset 1 of a category (denoted as a category 1) in which an image has the heart pacemaker and a subset 2 of a category (denoted as a category 2) in which an image does not have the heart pacemaker.

Specifically, the image division module M1 may separately attach category labels to images in subsets of different categories. Further, the image division module M1 provides the images and the corresponding category labels to the inter-category conversion training module M2. For example, a category label of the subset 1 of the category 1 in which an image has the heart pacemaker is "with a heart pacemaker", and a category label of the subset 2 of the category 2 in which an image does not have the heart pacemaker is "without a heart pacemaker".

In some embodiments, the to-be-verified factor may be a manually specified factor. Further, the image division module M1 may divide the verification dataset based on categories corresponding to the manually specified factor to obtain different subsets. In other words, the image division module M1 divides the verification dataset in response to an operation of a user to obtain different subsets. In an example, the user may use a known structured factor as the to-be-verified factor. For example, in a pathological image, a manually determined to-be-verified factor may be a factor like an imaging machine or dye reagent model.

In some other embodiments, the image division module M1 may further automatically obtain one or more to-be-verified factors through a bias factor mining apparatus, and divide the verification dataset based on these to-be-verified factors to obtain different subsets.

In an example, the bias factor mining apparatus is a unit in the image division module M1.

In another example, the bias factor mining apparatus is an apparatus that is in the electronic device and that is different from the evaluation apparatus 20. In this case, the image division module M1 may analyze the verification dataset, to determine a to-be-verified factor that may cause a bias in a process of evaluating the verification dataset. Further, the image division module M1 in the evaluation apparatus 20 obtains, from the bias factor mining apparatus, a to-be-verified factor for the current verification dataset.

Generally, an image feature of a foreground of an image may be used as an object to be evaluated by the to-be-evaluated model 10, and an image feature of a background in the image is not used as an object to be evaluated by the to-be-evaluated model 10. In this case, if the to-be-evaluated model 10 learns image features of too many backgrounds in a process of training the to-be-evaluated model 10, the to-be-evaluated model 10 may have a bias against evaluation of the image feature of the foreground. For example, in the medical image field, a background of an image in the verification dataset includes information such as an exclusive identifier that is related a hospital or a disease, and the information may affect an inference result of the to-be-evaluated model 10 for a heart image feature in a foreground or an image feature of a cell in a cervical. In other words, the information may be used as a to-be-verified factor.

In some embodiments, for the verification dataset, the bias factor mining apparatus may recognize a foreground and a background in an image, and determine a to-be-verified factor for bias evaluation from an image feature of the background of the image. For example, in the medical image field, an image feature corresponding to the information such as the exclusive identifier that is related a hospital or a disease may be determined from a background of an image as a to-be-verified factor.

The inter-category conversion training module M2 is configured to train an image style conversion model by using an image and a category label that are provided by the image division module M1, to obtain a weight parameter of the trained image style conversion model. A main function of the image style conversion model is to implement style conversion between images of different categories. Further, the inter-category conversion training module M2 outputs the weight parameter of the image style conversion model to the inter-category conversion inference module M3.

In an embodiment, the image style conversion model may use a cycle generative adversarial network (Cycle Generative Adversarial Network, cyclegan) technology to implement conversion between different styles of an image. It may be understood that the cyclegan technology may implement style conversion similar to that between a horse and a zebra, for example, implement style conversion like style conversion between an apple and an orange.

It should be noted that, the image style conversion model uses the cyclegan technology to add or eliminate some image features on an image for each verification factor, to verify whether the factor affects an inference result of the to-be-evaluated model 10. For example, for a to-be-verified factor of whether an X-ray image has an image feature of a heart pacemaker, the image style conversion model may add the image feature of the heart pacemaker to an X-ray image of a normal person by using the cyclegan technology, that is, convert an image whose style (for example, the style 1 represented by the category 1) is with the heart pacemaker into an image whose style (for example, the style 2) is without the heart pacemaker, to implement style conversion. In addition, the image style conversion model may remove the image feature of the heart pacemaker from an X-ray image of a heart disease patient by using the cyclegan technology, that is, convert an image whose style (for example, the style 2) is without the heart pacemaker into an image whose style (for example, the style 1) is with the heart pacemaker, to implement style conversion.

In some embodiments, a style of an image may include a local feature and a global feature, for example, a texture, a shape, a structure, and a color difference of the image. For example, the image feature of the heart pacemaker is a local feature. Alternatively, a color of the entire image or the like is a global feature.

The inter-category conversion inference module M3 is configured to: convert, through the image style conversion model, an image in a subset of each category in the verification dataset into a style corresponding to a subset of another category, to obtain a style-converted image, and output the original image in the verification dataset and the style-converted image to the to-be-evaluated model 10.

Further, the to-be-evaluated model 10 may perform inference on all original images in the verification dataset to obtain inference results, and perform inference on a style-converted image corresponding to an original image in each subset in the verification dataset to obtain an inference result. The to-be-evaluated model 10 outputs all inference results to the difference evaluation and visualization module M4.

The difference evaluation and visualization module M4 performs difference determining on inference results of images that are of different styles and that correspond to a same image, to determine difference samples, calculates a consistency score like a proportion of the difference samples in the total image samples in the verification dataset, and outputs evaluation results such as the difference samples and the consistency score to the user in a visualized manner.

Next, based on the system shown in FIG. 4, FIG. 5 is a schematic flowchart of a bias evaluation method. As shown in FIG. 5, an execution body of the method may be an electronic device, and the method includes the following steps.

S501: The evaluation apparatus 20 divides a verification dataset based on at least one to-be-verified factor to obtain a plurality of subsets, and attaches different category labels to images in different subsets.

In some embodiments, the electronic device may divide the verification dataset through the image division module M1 in the evaluation apparatus 20 shown in FIG. 4. For obtaining of the at least one to-be-verified factor, refer to the foregoing related descriptions of the image division module M1.

S502: For the images in the different subsets in the verification dataset, the evaluation apparatus 20 trains an image style conversion model for performing style conversion on the images in the subsets.

In some embodiments, the electronic device may input images in different subsets in the verification dataset and category labels of the images into the inter-category conversion training module M2 in the evaluation apparatus 20 shown in FIG. 4, to obtain an image style conversion model through training, so as to output a weight parameter of the model.

S503: For an image in each subset in the verification dataset, the evaluation apparatus 20 uses the image style conversion model to convert the image into an image in a style corresponding to a subset of another category.

In some embodiments, the electronic device may use, through the inter-category conversion inference module M3 in the evaluation apparatus 20 shown in FIG. 4, the image style conversion model to convert the image in each subset in the verification dataset into the image in the style corresponding to the subset of the another category.

For example, as shown in FIG. 1, the image 1 in the style 1 may be converted into the image 1' in the style 2 by using the image style conversion model.

In an example, the evaluation apparatus 20 may input, to the image conversion model, the image 1 carrying a classification label 1, so that the evaluation apparatus 20 performs style conversion on the image 1, and outputs the image 1' carrying a classification label 2, that is, converts the image 1 in the style 1 into the image 1' in the style 2. Similarly, when the verification dataset is divided into another subset other than the subset 1 and the subset 2, after the image 1 is input into the image style conversion model, the image style conversion model may alternatively convert the style of the image 1 into a style corresponding to a category of the another subset.

In another example, the evaluation apparatus 20 may input, to the image conversion model, the image 1 carrying a classification label 1 and a classification label 2, so that the evaluation apparatus 20 performs style conversion on the image 1, and outputs the image 1' carrying the classification label 2, that is, converts the image 1 in the style 1 into the image 1' in the style 2. Similarly, when the verification dataset is divided into another subset other than the subset 1 and the subset 2, after the image 1, the classification label 2, and a classification label corresponding to the another subset are input into the image style conversion model, the image style conversion model may alternatively convert the style of the image 1 into a style corresponding to a category of the another subset.

S504: Use the to-be-evaluated model 10 to separately perform inference on an original image in the verification dataset and an image obtained by performing style conversion on the original image.

For example, as shown in FIG. 1, the to-be-evaluated model 10 may separately perform inference on the image 1 and the image 1', to obtain respective inference results. In an example, an inference result of the to-be-evaluated model 10 for the image 1 is positive, that is, the image is a heart disease X-ray image; and an inference result of the to-be-evaluated model 10 for the image 1' is negative, that is, the image is an X-ray image of a normal person.

S505: The evaluation apparatus 20 compares all inference results, outputs images whose inference results differ greatly after style conversion is performed on original images in the subsets, and calculates a proportion of the images with large differences in the subsets in the verification dataset.

In some embodiments, the electronic device may determine, through the difference evaluation and visualization module M4 in the evaluation apparatus 20, images whose inference results differ greatly after style conversion is performed on original images in each subset in the verification dataset, to calculate a proportion of the images with large differences in the verification dataset.

For example, when an inference result of the to-be-evaluated model 10 for the image 1 is a heart disease X-ray image, and an inference result of the to-be-evaluated model 10 for the image 1' is a normal X-ray image, the evaluation apparatus 20 may determine that the image 1 is an image for which inference results differ greatly after style conversion is performed. Similarly, the evaluation apparatus 20 may determine another image for which inference results differ greatly after style conversion is performed on an original image in the verification dataset. Further, the proportion of the images whose inference results differ greatly in the subsets in the verification dataset is calculated.

In addition, in some other embodiments, a parameter that is for evaluating a bias degree and that is calculated by the electronic device through the evaluation apparatus 20 is not limited to the proportion of the images with large differences in the verification dataset, and parameters such as a total quantity of images with large differences and a proportion, in total sample images in each subset, of images with large differences in the subset may be further calculated. This is not specifically limited herein.

Further, in some embodiments, the electronic device may display, on a screen of the electronic device through the difference evaluation and visualization module M4 in the evaluation apparatus 20, images with large differences, images whose inference results differ after style conversion is performed, a proportion of the images with large differences in the verification dataset, a conclusion that the model has a bias against which data, and bias evaluation result information such as a factor that causes a bias.

In addition, in some other embodiments, for the original images in the verification dataset, the electronic device may perform style conversion on a part of the original images, then perform inference on these original images and images obtained through style conversion to obtain inference results, and further compare the inference results to obtain a bias evaluation result.

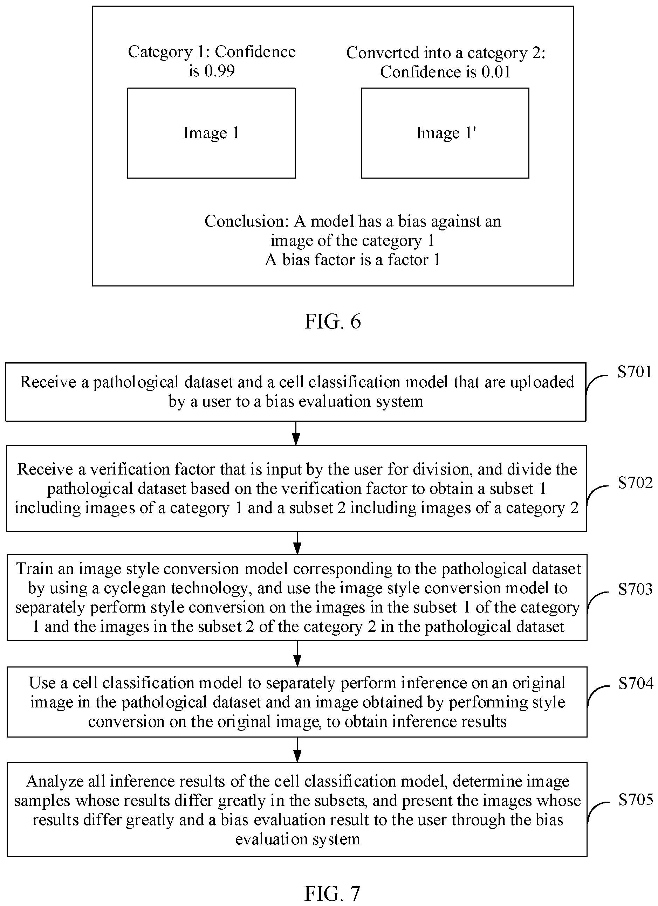

FIG. 6 is a diagram of a display interface of the bias evaluation result. As shown in FIG. 6, bias evaluation information obtained by the electronic device for the to-be-evaluated model 10 includes: the image 1 and a confidence obtained through inference of the image 1, the image 1' and a confidence obtained through inference of the image 1', and bias evaluation result information such as "Conclusion: The model has a bias against an image of the category 1" and "A bias factor is a factor 1".

For example, a style of the image 1 displayed on the screen of the electronic device in FIG. 6 is the style 1 corresponding to the subset 1 of the classification 1, and the style 1 is an X-ray image of a person with a heart pacemaker. Correspondingly, the style of the image 1' is the style 1 corresponding to the subset 1 of the classification 1, and the style 2 is an X-ray image of a person without a heart pacemaker. However, an inference result of the to-be-evaluated model 10 for the image 1 of the category 1 is a heart disease X-ray image with a confidence of 0.99, and it is considered that the inference result is a heart disease patient. An inference result of the to-be-evaluated model 10 for the image 1' of the category 2 is a heart disease X-ray image with a confidence of 0.01, and it is considered that the inference result is a normal person. It is clear that the two inference results are different. Therefore, a conclusion in the bias evaluation result shown in FIG. 6 may be that the to-be-evaluated model 10 has a bias against the to-be-verified factor of whether an X-ray image of a person having a heart pacemaker.

In this way, according to the bias evaluation method provided in embodiments of this application, an actual label of a sample image does not need to be collected, and a difficulty that images of some categories cannot be obtained is overcome. This has a low requirement on collecting sample images in the verification dataset, so that sample collection time of the user can be reduced. In addition, the bias evaluation result is intuitive to the user, and the user can directly observe impact of the bias factor on the result. This helps improve a capability of the user in analyzing and recognizing the bias of the model. In addition, according to the method, not only an overall bias degree of the verification dataset can be obtained, but also image data against which the to-be-evaluated model has a bias can be obtained through analysis. This helps the user analyze the model.

In addition, according to some embodiments of this application, the evaluation apparatus 20 may be an application, software, or a system installed on the electronic device. The software may provide a human-machine interaction interface, and support the user in importing the verification dataset, model information of the to-be-evaluated model 10, and the like, so as to output the bias evaluation result information on the screen according to the bias evaluation method.

In some embodiments, in a scenario in which the electronic device provides a bias evaluation system to perform human-machine interaction to complete bias evaluation, refer to a schematic flowchart of a bias evaluation method that is based on a medical image evaluation model shown in FIG. 7. The method shown in FIG. 7 includes the following steps.

S701: Receive a pathological dataset and a cell classification model that are uploaded by the user to the bias evaluation system, where the pathological dataset is a to-be-verified dataset, and the cell classification model is the to-be-evaluated model 10.

In an example, in a medical image recognition scenario in which a cervical cancer cell image is recognized, an image in the pathological dataset is a medical image, a positive sample is a cell image of a cervical cancer patient, and a negative sample may be a cell image of a normal person. Further, that an inference result is positive means that a medical image is a cervical cancer cell image, and that an inference result is negative means that an inference result of a medical image is a normal cell image.

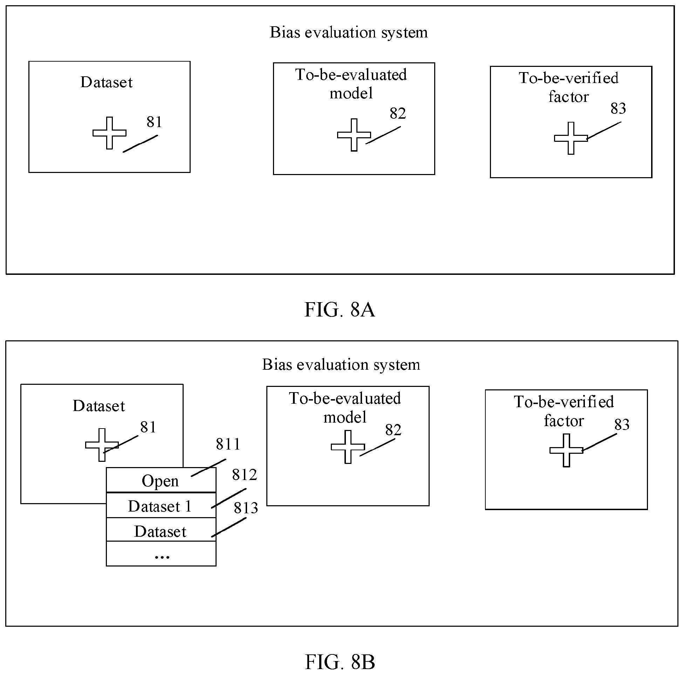

In an example, FIG. 8A is a diagram of uploading data to the bias evaluation system displayed by the electronic device. A main interface of the bias evaluation system shown in FIG. 8A includes a dataset selection control 81, a to-be-evaluated model selection control 82, and a factor selection control 83.

After the user taps the dataset selection control 81 shown in FIG. 8A, the electronic device may display a plurality of optional dataset controls including an open control 811 and datasets 812 and 813 shown in FIG. 8B. Further, the user may tap any dataset control to trigger uploading of data of a dataset to the bias evaluation system. For example, a control of the dataset 812 is selected, and the dataset 812 represents the pathological dataset. In addition, the user may tap the dataset open control 811 to link and select a dataset in any storage address in the electronic device.

Similarly, the user may tap the to-be-evaluated model selection control 82 shown in FIG. 8A, and control the electronic device to select a to-be-evaluated model, for example, select the cell classification model as the to-be-evaluated model.

S702: Receive a to-be-verified factor that is input by the user for division, and divide the pathological dataset based on the to-be-verified factor to obtain a subset 1 including images of a category 1 and a subset 2 including images of a category 2.

It may be understood that the to-be-verified factor that is input by the user is an image feature represented by the to-be-verified factor that is input by the user, and may be data of the image feature or identification information indicating the image feature. For example, the verification dataset for the cell classification model is an image feature of an atrophic cell, or a text identifier "atrophic cell".

Similarly, the user may tap the factor selection control 83 shown in FIG. 8A, and set a division factor for the current pathological dataset in the bias evaluation system. Details are not described again.

In an example, a probability of atrophy in a cell of an elderly person is generally high, but a cell of a young woman (or a normal woman) does not atrophy. However, the atrophy is not directly related to a lesion. Therefore, the atrophy may be predicted as a to-be-verified factor for bias evaluation. In this way, the pathological dataset may be divided into a subset including images whose classification label is "atrophy" (category 1) and a subset including images whose classification label is "not atrophy".

It should be noted that images in the verification dataset may be referred to as a plurality of evaluation images, the subset 1 may also be referred to as a first evaluation image set, and the subset 2 may be referred to as a second evaluation image set.

S703: Train an image style conversion model corresponding to the pathological dataset by using the cyclegan technology, and use the image style conversion model to separately perform style conversion on the images in the subset 1 of the category 1 (atrophy) and the images in the subset 2 of the category 2 (not atrophy) in the pathological dataset.

Similarly, for an image A1 of the category 1, a style of the image A1 may be converted from a style corresponding to the category 1 to a style corresponding to the category 2, to obtain a style-converted image B2. In other words, the image A1 is converted from the category 1 to the category 2. Specifically, style conversion is performed on the image with atrophic cells, and an atrophy-related image feature is eliminated from the image A1, to obtain the image B 1.

Specifically, for an image A2 of the category 2 (without atrophic cells), a style of the image A2 may be converted from the style corresponding to the category 2 to the style corresponding to the category 1, to obtain a style-converted image B2. In other words, the image A2 is converted from the category 2 to the category 1. Specifically, style conversion is performed on the image without atrophic cells, and the atrophy-related image feature is added to the image A2, to obtain the image B2.

S704: Use the cell classification model to separately perform inference on original images of the pathological dataset and images obtained by performing style conversion on the original images, to obtain inference results.

It should be noted that a set 3 including images in the style 2 that are converted from images in the subset 1 may be referred to as a third evaluation image set, and a set 4 including images in the style 1 that are converted from images in the subset 2 may be referred to as a fourth evaluation image set.

In an example, the cell classification model performs inference on the image A1 whose classification label is the category 1, and obtains that a confidence of a positive inference result is 0.99; and performs inference on the image B1 that is converted into the style corresponding to the category 2, and obtains that a confidence of a negative inference result is 0.01, that is, inference results are positive-prone. In addition, the cell classification model performs inference on the image A2 whose classification label is the category 2, and obtains that a confidence of a positive inference result is 0.01; and performs inference on the image B2 that is converted into the style corresponding to the category 1, and obtains that a confidence of a negative inference result is 0.99, that is, results are negative-prone.

S705: Analyze all inference results of the cell classification model, determine image samples whose results differ greatly in the subsets, and present the images whose results differ greatly and a bias evaluation result to the user through the bias evaluation system. The bias evaluation result includes a proportion, in total sample images in the verification dataset, of the images whose results differ greatly in the subsets in the verification dataset.

It should be noted that inference results of original images in the subset 1 and the subset 3, namely, inference results of the first evaluation image set and the third evaluation image set, may be referred to as first inference results. Inference results of original images in the subset 2 and the subset 4, namely, inference results of the second evaluation image set and the fourth evaluation image set, may be referred to as second inference results. Therefore, the first inference results and the second inference results may be compared, to obtain samples with large differences, so as to obtain a bias evaluation result.

Refer to the foregoing example. Inference results of the cell classification model for images of different styles of the image A1 of the category 1 are positive-prone, and inference results for images of different styles of the image A2 of the category 2 are negative-prone. This indicates that the cell classification model has a bias against atrophy. It is clear that the inference results of the cell classification model for the image A1 and the image A2 differ greatly.

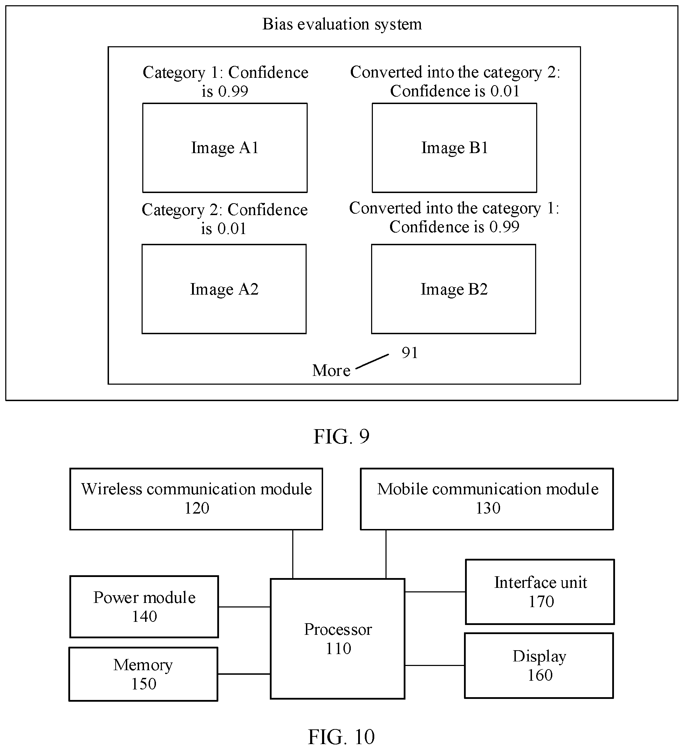

FIG. 9 is a diagram of a bias evaluation result displayed by the bias evaluation system shown by the electronic device. An interface shown in FIG. 9 includes images A 1, B 1, A2, and B2, and respective confidences corresponding to the images A1, B1, A2, and B2. In addition, when there are a large quantity of images with large differences, the bias evaluation system displays only a part of images and confidence of the images at a time. The user may trigger, by performing an operation on a more control 91 shown in FIG. 9, the bias evaluation system to update and display other images with large differences and confidence of the images. In this way, the user can intuitively learn of an evaluation result of the current cell classification model that has a bias against atrophy.

FIG. 10 is a diagram of a structure of an electronic device. Specifically, an electronic device 100 shown in FIG. 10 may include a processor 110, a power module 140, a memory 150, a mobile communication module 130, a wireless communication module 120, a display 160, an interface unit 170, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units, for example, may include a processing module or a processing circuit of a central processing unit (Central Processing Unit, CPU), a graphics processing unit (Graphics Processing Unit, GPU), a digital signal processor (Digital Signal Processor, DSP), a micro-programmed control unit (Micro-programmed Control Unit, MCU), an artificial intelligence (Artificial Intelligence, AI) processor, a field programmable gate array (Field Programmable Gate Array, FPGA), or the like. Different processing units may be independent devices, or may be integrated into one or more processors. For example, the processor 110 may be configured to run the to-be-evaluated model 10 and the evaluation apparatus 20 to perform the bias evaluation method provided in this application.

The memory 150 may be configured to store data, a software program, and a module; and may be a volatile memory (Volatile Memory), for example, a random access memory (Random Access Memory, RAM); a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD); a combination of the foregoing types of memories; or a removable storage medium, for example, a secure digital (Secure Digital, SD) storage card. Specifically, the memory 160 may include a program storage area (not shown in the figure) and a data storage area (not shown in the figure). The program storage area may store program code, and the program code is used to enable the processor 110 to execute the program code to perform the method for displaying content in a moving scenario provided in embodiments of this application.

The mobile communication module 130 may include but is not limited to an antenna, a power amplifier, a filter, a low noise amplifier (Low Noise Amplify, LNA), and the like. The mobile communication module 130 may provide a wireless communication solution that includes 2G/3G/4G/5G or the like and that is applied to the electronic device 2. The mobile communication module 130 may receive an electromagnetic wave through the antenna, perform processing such as filtering or amplification on the received electromagnetic wave, and transmit a processed electromagnetic wave to a modem processor for demodulation. The mobile communication module 130 may further amplify a signal modulated by the modem processor, and convert an amplified signal into an electromagnetic wave for radiation through the antenna. In some embodiments, at least some function modules of the mobile communication module 130 may be disposed in the processor 110. In some embodiments, at least some functional modules of the mobile communication module 130 may be disposed in a same device as at least some modules of the processor 110.

The wireless communication module 120 may include an antenna, and receive and send an electromagnetic wave through the antenna. The wireless communication module 120 may provide a wireless communication solution that includes a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (Infrared, IR) technology, or the like and that is applied to the electronic device 2.

The display 160 may be configured to: display a related interface of the foregoing bias evaluation system, support the user in selecting a to-be-verified dataset and a to-be-evaluated model, support the user in viewing a bias evaluation result of the model, and the like.

The interface unit 170 is configured to receive an input of the user, for example, an input of the user for inputting the verification dataset and the to-be-evaluated model on an interface of the bias evaluation system that is displayed on the display 160.

The power supply 140 is configured to supply power to units such as the display 160 and the processor 110 in the electronic device 100.

In some embodiments, the mobile communication module 130 and the wireless communication module 120 that are of the electronic device 100 may alternatively be located in a same module.

It may be understood that the hardware structure shown in FIG. 10 does not constitute a specific limitation on the electronic device 100. In some other embodiments of this application, the electronic device 100 may include more or fewer components than those shown in FIG. 10, or some components may be combined, or some components may be split, or there may be a different component arrangement.

Embodiments of mechanisms disclosed in this application may be implemented in hardware, software, firmware, or a combination of these implementation methods. Embodiments of this application may be implemented as a computer program or program code that is executed on a programmable system, and the programmable system includes at least one processor, a storage system (including volatile and non-volatile memories and/or a storage element), at least one input device, and at least one output device.

The program code may be applied to input instructions, to perform functions described in this application and generate output information. The output information may be applied to one or more output devices in a known manner. For a purpose of this application, a processing system includes any system having a processor like a digital signal processor (DSP), a microcontroller, an application-specific integrated circuit (ASIC), or a microprocessor.

The program code may be implemented in a high-level procedural language or an object-oriented programming language, to communicate with the processing system. The program code may alternatively be implemented by using an assembly language or a machine language when required. Actually, the mechanisms described in this application are not limited to a scope of any particular programming language. In any case, the language may be a compiled language or an interpretive language.

Embodiments of mechanisms disclosed in this application may be implemented in hardware, software, firmware, or a combination of these implementation methods. Embodiments of this application may be implemented as a computer program or program code executed on a programmable system. The programmable system includes at least one processor, a storage system (including volatile and non-volatile memories and/or a storage element), at least one input device, and at least one output device.

The program code may be applied to input instructions, to perform functions described in this application and generate output information. The output information may be applied to one or more output devices in a known manner. For a purpose of this application, a processing system includes any system having a processor like a digital signal processor (DSP), a microcontroller, an application-specific integrated circuit (ASIC), or a microprocessor.

The program code may be implemented in a high-level procedural language or an object-oriented programming language, to communicate with the processing system. The program code may alternatively be implemented by using an assembly language or a machine language when required. Actually, the mechanisms described in this application are not limited to a scope of any particular programming language. In any case, the language may be a compiled language or an interpretive language.

In some cases, the disclosed embodiments may be implemented in hardware, firmware, software, or any combination thereof. The disclosed embodiments may be alternatively implemented as instructions carried by or stored on one or more temporary or non-temporary machine-readable (for example, computer-readable) storage media, and the instructions may be read and executed by one or more processors. For example, the instructions may be distributed through a network or another computer-readable medium. Therefore, a machine-readable medium may include any mechanism for storing or transmitting information in a machine (for example, a computer)-readable form, including but not limited to a floppy disk, a compact disc, an optical disc, a compact disc read-only memory (CD-ROM), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory for transmitting information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting electronic instructions or information in a machine (for example, a computer)-readable form.

In the accompanying drawings, some structural or method features may be shown in a particular arrangement and/or order. However, it should be understood that such a particular arrangement and/or sequence may not be required. In some embodiments, these features may be arranged in a manner and/or a sequence different from that shown in the descriptive accompanying drawings. In addition, inclusion of the structural or method features in a particular figure does not imply that such features are required in all embodiments, and in some embodiments, these features may not be included or may be combined with other features.

It should be noted that all units/modules mentioned in the device embodiments of this application are logical units/modules. Physically, one logical unit/module may be one physical unit/module, or may be a part of one physical unit/module, or may be implemented by a combination of a plurality of physical units/modules. Physical implementations of these logical units/modules are not the most important, and a combination of functions implemented by these logical units/modules is a key to resolving technical problems proposed in this application. In addition, to highlight an innovative part of this application, a unit/module that is not closely related to resolving the technical problems proposed in this application is not introduced in the foregoing device embodiments of this application. This does not indicate that there is not another unit/module in the foregoing device embodiments.

It should be noted that, in examples and the specification of this patent, relational terms such as first and second are only used to distinguish one entity or operation from another entity or operation, and do not necessarily require or imply that any actual relationship or sequence exists between these entities or operations. Moreover, the terms "include", "contain", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some example embodiments of this application, a person of ordinary skill in the art should understand that various changes may be made to this application in form and detail without departing from the spirit and scope of this application.

## Claims

1. A bias evaluation method, applied to an electronic device, and comprising:
obtaining a to-be-verified factor existing in a plurality of evaluation images that are used to perform bias evaluation on a to-be-evaluated model;
classifying the plurality of evaluation images based on the to-be-verified factor, to obtain a first target evaluation image set, wherein the first target evaluation image set comprises a first evaluation image set comprising the to-be-verified factor and/or a second evaluation image set not comprising the to-be-verified factor;
performing style conversion on the first target evaluation image set based on the to-be-verified factor, to obtain a second target evaluation image set;
inputting the first target evaluation image set and the second target evaluation image set into the to-be-evaluated model for inference, to obtain a target inference result; and
outputting a bias evaluation result of the to-be-evaluated model based on the target inference result, wherein the bias evaluation result represents whether the to-be-verified factor causes a bias of the to-be-evaluated model, wherein
style conversion performed on the first evaluation image set is implemented by removing the to-be-verified factor, and style conversion performed on the second evaluation image set is implemented by adding the to-be-verified factor.

2. The method according to claim 1, wherein the bias evaluation result comprises at least one of the following:
information about whether the to-be-verified factor is a factor that causes the bias of the to-be-evaluated model;
a difference image in the first target evaluation image set, wherein the difference image is an evaluation image that is in the first target evaluation image set and whose inference result is different from an inference result of at least one corresponding converted image that is obtained through style conversion and that is in the second target evaluation image set, and both the inference result of the difference image and the inference result of the converted image are inference results output by the to-be-evaluated model;
a converted image that is obtained by performing style conversion on each difference image and that is comprised in the second target evaluation set;
an inference result of the to-be-evaluated model for each difference image;
an inference result of the to-be-evaluated model for each converted image; and
a proportion of a difference image in the first target evaluation image set in the plurality of evaluation images.

3. The method according to claim 2, wherein the to-be-verified factor is determined based on a background and a foreground of each original image in a verification dataset, and the to-be-verified factor corresponds to an image feature in the background.

4. The method according to claim 3, wherein style conversion of an image is implemented by using an image style conversion model, and the style conversion model is obtained through training based on the first evaluation image set and the second evaluation image set; and
the image style conversion model is configured to: remove the verification factor from an image comprising the verification factor, and add the verification factor to an image not comprising the verification factor, wherein the verification factor is an image feature.

5. The method according to claim 4, wherein the first evaluation image set corresponds to a first classification label, the second evaluation image set corresponds to a second classification label different from the first classification label, and the image style conversion model is obtained through training based on an image in the first evaluation image set, the first classification label, an image in the second evaluation image set, and the second classification label.

6. The method according to any one of claims 2 to 4, wherein the method further comprises:
receiving the verification dataset and the to-be-evaluated model that are input by a user.

7. The method according to claim 6, wherein the method further comprises:
receiving the to-be-verified factor that is input by the user, wherein the to-be-verified factor is an image feature or an identifier indicating an image feature.

8. A bias evaluation apparatus, comprising:
an obtaining module, configured to obtain a to-be-verified factor existing in a plurality of evaluation images that are used to perform bias evaluation on a to-be-evaluated model;
a classification module, configured to classify the plurality of evaluation images based on the to-be-verified factor obtained by the obtaining module, to obtain a first target evaluation image set, wherein the first target evaluation image set comprises a first evaluation image set comprising the to-be-verified factor and/or a second evaluation image set not comprising the to-be-verified factor;
a conversion module, configured to perform, based on the to-be-verified factor, style conversion on the first target evaluation image set obtained by the classification module, to obtain a second target evaluation image set;
an inference module, configured to input the first target evaluation image set obtained by the classification module and the second target evaluation image set obtained by the conversion module into the to-be-evaluated model for inference, to obtain a target inference result; and
an output module, configured to output a bias evaluation result of the to-be-evaluated model based on the target inference result obtained by the inference module, wherein the bias evaluation result represents whether the to-be-verified factor causes a bias of the to-be-evaluated model, wherein
style conversion performed on the first evaluation image set is implemented by removing the to-be-verified factor, and style conversion performed on the second evaluation image set is implemented by adding the to-be-verified factor.

9. The apparatus according to claim 8, wherein the bias evaluation result comprises at least one of the following:
information about whether the to-be-verified factor is a factor that causes the bias of the to-be-evaluated model;
a difference image in the first target evaluation image set, wherein the difference image is an evaluation image that is in the first target evaluation image set and whose inference result is different from an inference result of at least one corresponding converted image that is obtained through style conversion and that is in the second target evaluation image set, and both the inference result of the difference image and the inference result of the converted image are inference results output by the to-be-evaluated model;
a converted image that is obtained by performing style conversion on each difference image and that is comprised in the second target evaluation set;
an inference result of the to-be-evaluated model for each difference image;
an inference result of the to-be-evaluated model for each converted image; and
a proportion of a difference image in the first target evaluation image set in the plurality of evaluation images.

10. The apparatus according to claim 9, wherein the to-be-verified factor is determined based on a background and a foreground of each original image in a verification dataset, and the to-be-verified factor corresponds to an image feature in the background.

11. The apparatus according to claim 10, wherein style conversion of an image is implemented by using an image style conversion model, and the style conversion model is obtained through training based on the first evaluation image set and the second evaluation image set; and
the image style conversion model is configured to: remove the verification factor from an image comprising the verification factor, and add the verification factor to an image not comprising the verification factor, wherein the verification factor is an image feature.

12. The apparatus according to claim 11, wherein the first evaluation image set corresponds to a first classification label, the second evaluation image set corresponds to a second classification label different from the first classification label, and the image style conversion model is obtained through training based on an image in the first evaluation image set, the first classification label, an image in the second evaluation image set, and the second classification label.

13. The apparatus according to any one of claims 9 to 11, wherein the apparatus further comprises:
an input module, configured to receive the verification dataset and the to-be-evaluated model that are input by a user.

14. The apparatus according to claim 13, wherein
the input module is configured to receive the to-be-verified factor that is input by the user, wherein the to-be-verified factor is an image feature or an identifier indicating an image feature.

15. A computer-readable storage medium, wherein the computer-readable storage medium stores instructions, and when the instructions are executed on an electronic device, the electronic device is enabled to perform the bias evaluation method according to any one of claims 1 to 7.

16. A computer program product, wherein the computer program product comprises instructions, and the instructions are used to implement the bias evaluation method according to any one of claims 1 to 7.

17. An electronic device, comprising:
a memory, configured to store instructions executed by one or more processors of the electronic device; and
the processors, wherein when the instructions are executed by the one or more processors, the processors are configured to perform the bias evaluation method according to any one of claims 1 to 7.
